Europäisches Patentamt

European Patent Office

Office européen des brevets

(19)

(11) **EP 0 934 615 B1**

(12) **FASCICULE DE BREVET EUROPEEN**

(45) Date de publication et mention
de la délivrance du brevet:
**18.09.2002 Bulletin 2002/38**

(51) Int Cl.⁷: **H02H 5/00**

(21) Numéro de dépôt: **98933723.3**

(22) Date de dépôt: **25.06.1998**

(86) Numéro de dépôt international:
**PCT/FR98/01352**

(87) Numéro de publication internationale:
**WO 99/000882 (07.01.1999 Gazette 1999/01)**

(54) **PROCEDE ET DISPOSITIF DE GESTION DU FONCTIONNEMENT SOUS IRRADIATION D'UN COMPOSANT ELECTRONIQUE A TRANSISTORS MOS COMPLEMENTAIRES**

VERFAHREN UND VORRICHTUNG ZUM BETREIBEN EINES UNTER STRAHLUNG ARBEITENDEN ELEKTRONISCHEN BAUTEILS MIT KOMPLEMENTÄREN MOS-TRANSISTOREN

METHOD AND DEVICE FOR MANAGING AN ELECTRONIC COMPONENT WITH COMPLEMENTARY MOS TRANSISTORS FUNCTIONING UNDER RADIATION

(84) Etats contractants désignés:
**DE GB IT**

(30) Priorité: **26.06.1997 FR 9708025**

(43) Date de publication de la demande:
**11.08.1999 Bulletin 1999/32**

(73) Titulaire: **COMMISSARIAT A L'ENERGIE ATOMIQUE**
**75015 Paris (FR)**

(72) Inventeurs:
- **GIRAUD, Alain**
**F-91400 Orsay (FR)**
- **JOFFRE, Francis**
**F-91440 Bures-sur-Yvette (FR)**

(74) Mandataire: **Des Termes, Monique et al**
**Société Brevatome**
**3, rue du Docteur Lancereaux**
**75008 Paris (FR)**

(56) Documents cités:
**EP-A- 0 461 982**　　　**FR-A- 2 721 122**

- **GIRAUD A ET AL: "Rad-hard embedded computers for nuclear robotics" RADECS 93. SECOND EUROPEAN CONFERENCE ON RADIATION AND ITS EFFECTS ON COMPONENTS AND SYSTEMS (CAT. NO.93TH0616-3), PROCEEDINGS OF 2ND EUROPEAN CONFERENCE RADIATIONS AND THEIR EFFECTS ON DEVICES AND SYSTEMS (RADECS 93), ST. MALO, FRANCE, 13-16 SEPT. 1, pages 43-47, XP002061045 ISBN 0-7803-1793-9, 1994, NEW YORK, NY, USA, IEEE, USA cité dans la demande**
- **PEASE R L: "Total-dose issues for microelectronics in space systems" IEEE TRANSACTIONS ON NUCLEAR SCIENCE, APRIL 1996, IEEE, USA, vol. 43, no. 2, pt.1, pages 442-452, XP002061046 ISSN 0018-9499 cité dans la demande**
- **SHUMAKE D P ET AL: "Hardened CMOS/SOS LSI circuits for satellite applications" IEEE ANNUAL CONFERENCE ON NUCLEAR AND SPACE RADIATION EFFECTS, WILLIAMSBURG, VA, USA, 12-15 JULY 1977, vol. ns-24, no. 6, pages 2177-2180, XP002061047 ISSN 0018-9499, IEEE TRANSACTIONS ON NUCLEAR SCIENCE, DEC. 1977, USA**

**Description**

Domaine technique

La présente invention concerne un procédé de gestion du fonctionnement sous irradiation d'au moins un composant électronique à transistors MOS (Metal Oxyde Semiconducteur) complémentaires. Elle concerne également un dispositif d'alimentation d'un tel composant électronique et des systèmes incluant un ou plusieurs de tels dispositifs.

Au sens de la présente invention, on entend par composant électronique à transistors MOS complémentaires ou CMOS, non seulement des composants élémentaires individuels tels que des portes, des inverseurs, comportant des transistors CMOS, mais aussi des ensembles formés d'une pluralité de composants élémentaires individuels, tels que des circuits, des parties de circuits, des microprocesseurs ou des calculateurs, comportant des transistors CMOS.

L'invention trouve des applications dans la fabrication de dispositifs électroniques, tels que des dispositifs de commande, utilisables dans une atmosphère hostile de rayonnements ionisants, notamment dans l'industrie du nucléaire civil. L'invention trouve également des applications dans la réalisation de dispositifs électroniques embarqués destinés à être utilisés dans une atmosphère hostile de rayonnements ionisants.

Etat de la technique antérieure

Le développement de systèmes électroniques utilisés dans l'industrie du nucléaire civil s'est considérablement accru durant les années 1990.

Pour des raisons de coût, de délai et de législation, les composants spécifiquement conçus pour résister aux radiations ont été en grande partie remplacés par des composants standard très largement diffusés, en particulier par des composants de type CMOS (composants à transistors du type Metal-Oxyde-Semiconducteur Complémentaires).

Ainsi, en sélectionnant au préalable des composants dont la tenue aux radiations est bonne et en respectant certaines règles de conception de l'architecture des systèmes, ces systèmes peuvent être utilisés avec des doses de rayonnements ionisants supérieures à 1 Mrad.

Des études actuellement menées montrent même que la qualité croissante des procédés de fabrication des composants améliore de façon très significative leur tenue intrinsèque. Il n'en reste pas moins vrai que la versatilité des nouveaux composants rend difficile la maîtrise préalable de la tenue aux radiations. Pour la plupart des applications embarquées, il est important de réagir préventivement à la perte de fonctionnalité d'un système électronique. Une perte de fonctionnalité peut en effet être la cause d'une dégradation importante des composants due à la dose de rayonnement intégrée.

On considère qu'un composant est sujet à une perte de fonctionnalité soit lorsqu'il se trouve en panne soit lorsque l'exécution des tâches qui lui sont assignées n'est pas exempte d'erreurs.

Si l'architecture d'un système électronique est conçue avec un certain nombre d'éléments ou de parties redondantes, il est possible de reconfigurer le système pour mettre en circuit de nouveaux éléments qui n'étaient pas sous tension et pour mettre hors circuit des éléments qui étaient sous tension. On peut se reporter à ce sujet, par exemple, au document (1) dont la référence est indiquée à la fin de la présente description.

Une telle reconfiguration permet ainsi d'éliminer du système de façon préventive, temporaire ou définitive les composants en panne ou susceptibles de provoquer une panne.

La reconfiguration d'un système électronique soumis à des rayonnements, lors de laquelle certains composants sont mis hors tension, permet d'éviter une dégradation trop importante des composants et même de "régénérer" ces derniers.

Il est en effet connu que les composants électroniques des micro-contrôleurs et particulièrement les composants du type MOS (Metal-Oxyde-Semiconducteur), soumis à des rayonnements ionisants, mais mis hors tension, peuvent récupérer, au moins en partie, leurs caractéristiques initiales, après avoir été dégradés lorsqu'ils étaient sous tension.

Le phénomène de régénération des composants hors tension, en présence de radiations, est dû à une évacuation des charges induites par les radiations et par un effet de compensation et de redistribution des charges. En particulier, dans les composants MOS, les trous migrent vers la zone d'interface oxyde-semi-conducteur pour compenser les charges piégées dans la couche d'oxyde. On peut se reporter à ce sujet aux documents (2) et (3) dont les références sont indiquées à la fin de la présente description.

Pour envisager une reconfiguration d'un système électronique et anticiper les éventuelles pannes des composants, il est nécessaire d'établir une relation entre la dose de rayonnement ionisant reçue par les composants et la fonctionnalité du système.

Pour déterminer la dose de rayonnement reçue par les composants, il est connu'de prendre en compte un décalage de la tension de seuil des composants CMOS.

A titre d'exemple, un composant CMOS simple, tel qu'un inverseur de type 7404 peut être utilisé comme dosimètre.

Un inverseur de type 7404 se compose d'une paire de transistors NMOS et PMOS. Pour une tension d'alimentation du composant +Vcc donnée, le seuil de commutation de l'inverseur est de l'ordre de Vcc/2. Lorsque le composant est soumis à des radiations, ce seuil diminue. Selon les conditions de polarisation pendant l'irradiation (polarisation haute) le seuil peut même devenir négatif.

Il apparaît qu'en polarisation nulle, pendant l'irradiation du composant, la tension de seuil de l'inverseur est une fonction relativement homogène de la dose reçue.

Associé à un système électronique, un inverseur de type 7404 à composants MOS peut ainsi servir à mesurer la dose de radiation reçue. On peut se référer à ce sujet au document (4) dont la référence est indiquée à la fin de la description.

Un autre paramètre utile pour mesurer l'irradiation est le courant de consommation des composants MOS complémentaires (CMOS). Le courant de consommation d'un composant CMOS augmente avec la dose de rayonnement reçue. Ceci est une conséquence d'un franchissement de la tension de seuil de 0 volt des transistors NMOS (MOS de type n). Le courant de fuite des transistors s'accroît en effet quand la tension de seuil est négative. Aussi, dans certains dispositifs, on utilise la mesure du courant de repos pour contrôler la dose de rayonnement ionisant reçue. On peut se reporter à ce sujet au document (5) dont la référence est indiquée à la fin de la présente description.

Il apparaît cependant que l'utilisation du paramètre du courant consommé par un composant traduit mal la disponibilité du composant ou du système électronique sur lequel ce courant est mesuré. En effet, l'intensité du courant reste sensible au débit de dose et ne montre pas l'influence d'une régénération du composant. Il est courant d'observer un accroissement rapide du courant consommé suivi d'une décroissance plus lente, sans pour autant que la disponibilité du ou des composants n'en soit affectée. Par ailleurs, le plus souvent les composants électroniques soumis à des radiations sont en mesure de fonctionner au-delà des caractéristiques fournies par le constructeur de ces composants.

Les dispositifs ou procédés de détermination de dose d'irradiation décrits ci-dessus permettent certes de signaler le dépassement de seuils critiques prédéterminés mais ne permettent pas de garantir le fonctionnement d'un système électronique pour une tâche donnée à accomplir dans un temps donné.

Ainsi, pour augmenter la fiabilité du fonctionnement d'un système électronique, on surdimensionne en général ce système. Une telle mesure a cependant des conséquences négatives sur le coût du système, sa complexité et son encombrement.

De plus, les moyens précédemment décrits ne tiennent pas compte du phénomène de régénération des composants, déjà évoqué.

Pour compléter la description de l'art antérieur, on peut mentionner le document (6) qui montre l'influence d'une irradiation sur la tension minimum d'alimentation d'un composant MOS.

Exposé de l'invention

L'invention a pour but de proposer un procédé et un dispositif pour la gestion du fonctionnement de composants électroniques ne présentant pas les limitations exposées ci-dessus.

Un but de l'invention est en effet de garantir le fonctionnement d'un composant ou d'une pluralité de composants électroniques pendant une durée déterminée, en tenant compte des rayonnements ionisants reçus par les composants pendant cette durée.

L'invention a également pour but la prise en compte de la capacité des composants à se régénérer lorsqu'ils ne sont pas sous tension.

Pour atteindre ces buts l'invention a plus précisément pour objet un procédé selon la revendication 1.

L'invention s'applique en particulier à des composants comprenant un ou plusieurs étages de transistors complémentaires de type MOS (Metal-Oxyde-Semiconducteur).

Le procédé peut en outre comporter une phase dite de repos, engagée soit lorsque la phase de travail est achevée, soit lorsque la vérification a révélé un fonctionnement défectueux. Lors de cette phase, on applique au composant une tension de repos.

Au sens de l'invention, on entend par tension nominale d'alimentation la tension à laquelle le composant doit normalement être alimenté pour son fonctionnement dans un dispositif dans lequel il est intégré.

Par ailleurs, on définit la tension minimale de fonctionnement comme étant la plus faible tension d'alimentation nécessaire au composant pour exécuter un travail sans perte de fonctionnalité.

L'invention repose sur le constat que le fonctionnement correct d'un composant électronique irradié peut être assuré en lui appliquant une tension d'alimentation plus importante.

En d'autres termes, un accroissement $\Delta V$ de la tension d'alimentation permet de maintenir le fonctionnement correct d'un composant pour une dose d'irradiation déterminée intégrée par le composant lors d'une phase de travail. Ainsi, en mesurant la dose de rayonnement ionisant intégrée par le composant on peut déterminer une durée de fonctionnement ou durée de phase de travail pendant laquelle le fonctionnement correct du composant, dont la tension d'alimentation est augmentée de $\Delta V$, peut être maintenu.

Grâce au procédé de l'invention, si le bon fonctionnement du composant est vérifié pour la tension initiale $V_{init}$, le fonctionnement pendant la phase de travail à une tension supérieure d'au moins $\Delta V$ à la tension initiale, peut être maintenu. .

En particulier, le composant peut être alimenté pendant la phase de travail avec une tension d'alimentation sensiblement égale à sa tension nominale.

Dans ce cas, la tension initiale à laquelle est effectué le contrôle est telle que $V_{init} = V_{nom} - \Delta V$.

Pour garantir le fonctionnement sous radiation pendant une durée déterminée, la durée de la phase de travail peut être ajustée en fonction de l'accroissement de la tension d'alimentation $\Delta V$ dû aux radiations.

Pour une dose donnée intégrée par un composant, la tension d'alimentation de ce composant présente une valeur minimale de fonctionnement notée $V_{min}$.

Ainsi, selon un aspect particulier de l'invention, on peut déterminer pour chaque composant électronique la tension minimale de fonctionnement sous irradiation $V_{min}$ et on ajuste la durée de la phase de travail par rapport à la durée de la phase de repos en fonction de ladite tension minimale de fonctionnement.

De façon plus précise, on peut aussi ajuster la durée de la phase de travail et de la phase de repos en fonction d'une différence entre la tension nominale et la tension minimale.

Ces mesures permettent d'obtenir un fonctionnement optimal du ou des composants en prenant en compte leur faculté de se régénérer pendant la phase de repos lors de laquelle une tension de repos, de préférence nulle, leur est appliquée. De plus, pour tenir parfaitement compte de la régénération des composants, on peut déterminer la tension minimale de fonctionnement pendant ou juste après la phase de repos.

Selon un autre aspect particulier de l'invention, on définit un procédé dans lequel :

- on détermine une tension minimale de fonctionnement $V_{min}$ du composant sous irradiation puis

- on alimente le composant à une tension d'alimentation $V_{alim}$ telle que $V_{min}+\Delta V \leq V_{alim} \leq V_{nom}$, pendant une phase de travail dont la durée est déterminée en fonction de $\Delta V$, $\Delta V$ étant une tension, puis

- on applique au composant une tension de repos pendant une phase de repos.

Ainsi, comme la tension d'alimentation est supérieure à la tension minimale de fonctionnement d'une quantité au moins égale à $\Delta V$, le composant peut intégrer une dose d'irradiation, fonction de $\Delta V$, sans perdre sa fonctionnalité. Le lien entre la différence de tension $\Delta V$ et la dose d'irradiation admissible peut être établi de façon expérimentale.

L'invention a également pour objet un dispositif selon la revendication 11.

Les moyens de sélection sont par exemple une porte électronique avec trois entrées reliées respectivement à la source de tension nominale à la source de tension de repos et à la source de tension initiale.

Les moyens de contrôle du bon fonctionnement du composant peuvent être des circuits de test aptes à effectuer des tests tels que, par exemple, des tests de "vie", des tests de "cohérence" ou des "autotests". Les moyens de contrôle peuvent aussi comporter des circuits de type "chien de garde".

Les circuits de type "chien de garde" sont généralement prévus pour des composants tels qu'un microprocesseur. Le microprocesseur doit régulièrement appliquer au circuit "chien de garde" une impulsion de signe de vie qui constitue une vérification de son bon fonctionnement.

L'invention concerne également un calculateur comprenant une pluralité d'unités de calcul redondantes susceptibles de fonctionner tour à tour. Conformément à l'invention, chaque unité de calcul est équipée d'un dispositif de contrôle d'alimentation tel que décrit ci-dessus.

En particulier, chaque unité de calcul peut être un micro-contrôleur.

Pour ordonner le fonctionnement à tour de rôle des unités de calcul, un tel micro-contrôleur peut être programmé pour piloter, lors de l'achèvement d'une phase de travail, la mise sous tension d'une autre unité de calcul.

De façon plus précise, chaque unité de calcul peut être programmée pour :

a) sélectionner une unité de calcul suivante lors de l'achèvement d'une phase de travail,
b) commander les moyens de contrôle du dispositif de contrôle d'alimentation de ladite unité de calcul suivante pour initier une phase de contrôle et une phase de travail si le contrôlé révèle un fonctionnement correct,
c) sélectionner une autre unité de calcul suivante si le contrôle révèle un fonctionnement défectueux.

En tant que variante du système décrit ci-dessus, l'invention concerne également un système électronique comportant une pluralité d'unités de calcul et un module électronique de supervision pour le fonctionnement à tour de rôle des unités de calcul. Dans ce système, le module de supervision comporte au moins un dispositif de contrôle d'alimentation tel que décrit ci-dessus, associé à la pluralité d'unités de calcul.

Selon un autre aspect particulier de l'invention, on définit un procédé de test d'un composant comprenant au moins un transistor de type CMOS, dans lequel :

- on fait fonctionner le composant en diminuant la tension d'alimentation du composant jusqu'à détecter un fonctionnement défectueux du composant,

- on relève la tension d'alimentation ($V_{min}$) du composant en-dessous de laquelle le fonctionnement défectueux se produit, et

- on compare cette tension d'alimentation à une tension nominale d'alimentation ($V_{nom}$) du composant pour établir une marge de tolérance de fonctionnement du composant sous irradiation.

La marge de tolérance de fonctionnement peut être comprise, par exemple, comme la différence entre la tension nominale et la tension en-dessous de laquelle un fonctionnement défectueux est observé. La marge de tolérance de fonctionnement constitue ainsi une information sur la qualité du composant, qui traduit son aptitude à fonctionner dans un milieu irradié.

D'autres caractéristiques et avantages de l'invention ressortiront mieux de la description qui va suivre, en référence aux figures des dessins annexés, donnée à titre purement illustratif et non limitatif.

Brève description des figures

- La figure 1 est un schéma simplifié illustrant un dispositif expérimental de mesure de la tension minimale de fonctionnement d'un composant électronique dans une zone irradiée.
- La figure 2 est un diagramme montrant une relation entre la tension minimale de fonctionnement d'un composant alimenté continuellement, en fonction d'une dose d'irradiation reçue par ce composant.
- La figure 3 est un diagramme montrant une relation entre la tension minimale de fonctionnement d'un ensemble de composants électroniques identiques, en fonction d'une dose d'irradiation reçue par ces composants, les composants restant non alimentés pendant l'irradiation et étant remis sous irradiation après la mesure de la tension minimale de fonctionnement.
- La figure 4 est une représentation schématique simplifiée d'un dispositif de contrôle d'alimentation conforme à l'invention.
- La figure 5 est une représentation schématique simplifiée d'un calculateur électronique équipé de dispositifs de contrôle d'alimentation conformes à l'invention.
- La figure 6 est un système électronique d'unités de calcul équipé d'un dispositif de contrôle d'alimentation conforme à l'invention.

Description détaillée de modes de mise en oeuvre de l'invention

Avant la description proprement dite de dispositifs conformes à l'invention, il convient d'indiquer le fonctionnement d'un dispositif expérimental permettant de mesurer la tension minimale de fonctionnement $V_{min}$ d'un composant. Cette tension constitue en effet un paramètre utile pour la mise en oeuvre de l'invention.

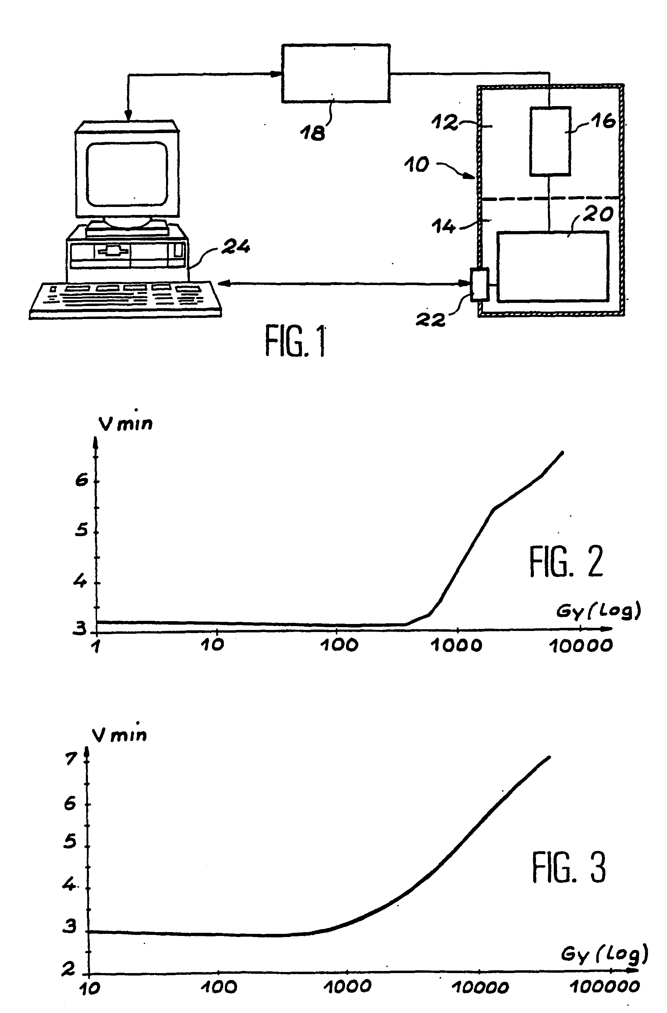

A cet effet, la figure 1 donne un exemple d'un dispositif de mesure automatique de la tension minimale.

Le dispositif comporte un champ de mesure 10 avec une zone 12 d'irradiation et une zone 14, dite protégée, dans laquelle l'irradiation est négligeable.

Un composant 16, par exemple une carte de circuits imprimés ou un microprocesseur, dont on veut connaître la tension minimale de fonctionnement, est disposé dans la zone d'irradiation 12 pour y être soumis à un rayonnement ionisant déterminé.

Le composant 16 est relié d'une part à un dispositif d'alimentation contrôlé 18, disposé hors du champ de mesure 10, et, d'autre part, à un système électronique logique de contrôle 20 de son bon fonctionnement. Le système logique de contrôle 20 est disposé dans la zone protégée 14 pour ne pas subir l'irradiation. Il est destiné à effectuer un certain nombre de tests permettant de vérifier la fonctionnalité du composant qui y est relié.

Par ailleurs, le système logique de contrôle 20 est équipé d'un logiciel de dialogue et d'un port d'échange d'information 22 par lequel il est relié à une unité de contrôle telle qu'un micro-ordinateur personnel 24.

Le micro-ordinateur personnel est également relié au dispositif d'alimentation contrôlé 18 afin de piloter et faire varier la tension d'alimentation appliquée au composant 16.

Selon un premier protocole expérimental, le composant 16, irradié, fonctionne en continu et dialogue avec l'unité logique de contrôle 20 qui vérifie son bon fonctionnement. Une tension nominale de 5 volts est tout d'abord appliquée au composant 16. Puis toutes les dix minutes environ, le dispositif d'alimentation est piloté pour déterminer la tension minimale de fonctionnement. De façon pratique, la tension fournie au composant 16 est diminuée par pas de 0,1 volts jusqu'à la détection d'une perte de fonctionnalité par le système logique de contrôle 20.

La perte de fonctionnalité se traduit par le fait que des tests effectués par le système logique de contrôle 20 s'avèrent négatifs ou plus simplement par la perte de communication entre le micro-ordinateur 24 et le système logique de contrôle 20.

La figure 2 représente sous forme graphique l'évolution de la tension minimale de fonctionnement d'un microprocesseur de type OKI 80 C86, mesurée de la façon décrite ci-dessus.

Pour établir les mesures représentées à la figure 2 le composant a été soumis à une irradiation de 100 Gy/h.

Enfin, on note que, sur la figure 2, la dose de rayonnement reçue par le composant est reportée en abscisse, en échelle logarithmique et exprimée en Gray, tandis que la tension minimale de fonctionnement est indiquée en ordonnée et exprimée en volt.

L'analyse de la figure 2 montre clairement une augmentation de la tension minimale de fonctionnement au cours du temps, en fonction de l'augmentation de la dose d'irradiation intégrée par le composant.

Lors d'une autre série de mesures expérimentales, des micro-contrôleurs de type 68EMO5C4EC ont été soumis à une irradiation de 60 Gy/h.

Cependant, les micro-contrôleurs n'étaient pas alimentés pendant l'irradiation et les mesures de tension minimales de fonctionnent ont été effectués pour des doses paliers en retirant les micro-contrôleurs de la zone d'irradiation.

Les résultats de mesure de tension minimale sont indiqués par la courbe de la figure 3.

Sur la -figure 3 la dose reçue par un micro-contrôleur est reportée en abscisse et exprimée en Gray tandis que la tension minimale de fonctionnement en volt est indiquée en ordonnée.

On peut également noter en examinant la figure 3 que la tension minimale de fonctionnement augmente avec la dose d'irradiation intégrée par le composant.

Le fait de ne pas alimenter les composants pendant l'irradiation leur permet d'être dans les conditions les plus favorables, et ainsi de supporter des doses d'irradiation plus élevées. Une telle étude permet d'effectuer une première sélection des composants pour leur résistance à l'irradiation.

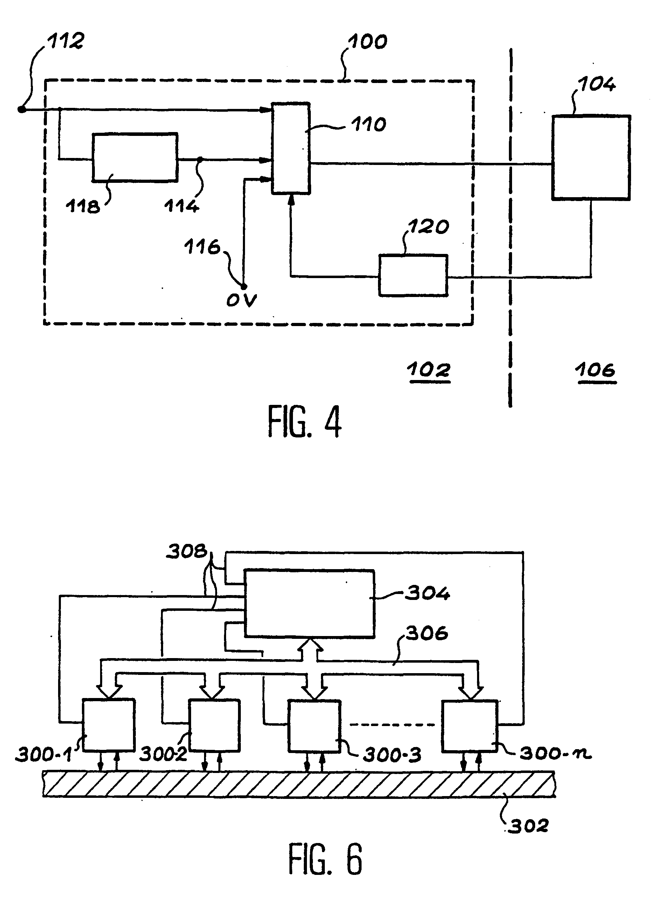

La figure 4 représente schématiquement un dispositif de contrôle d'alimentation conforme à l'invention.

Le dispositif de contrôle d'alimentation est indiqué avec la référence générale 100. Il est relié à un composant électronique 104, disposé généralement dans une zone irradiée 106, pour l'alimenter en énergie électrique.

Le dispositif 100 comporte un circuit de sélection 110 à commutateurs permettant de relier sélectivement le composant électronique 104 à une source de tension nominale 112, une source de tension 114 dite initiale et à une source de tension de repos 116.

La source de tension initiale est fournie par un circuit abaisseur de tension 118 connecté à la source de tension nominale 112.

Enfin, la source de tension de repos peut simplement être une borne reliée à la masse. Sa tension est alors de 0 volt.

Le circuit de sélection 110 permet de faire fonctionner le circuit 104 selon trois phases de fonctionnement, caractérisées chacune par une tension appliquée au circuit 104.

La première phase est une phase dite de travail lors de laquelle le composant 104 est relié à la tension nominale et fonctionne normalement. La durée de cette phase est fixée par le dispositif de contrôle 120, de préférence en fonction d'une différence de tension entre la tension nominale et la tension initiale et en fonction de l'intensité du rayonnement auquel le composant est soumis. Dans un tel cas, le dispositif de contrôle 120 peut également être équipé d'un dosimètre, si l'irradiation n'est pas connue. Cet organe n'est toutefois pas essentiel et n'est pas représenté sur la figure.

Une autre phase est la phase de repos pendant laquelle le composant n'est pas sous tension ou est sous une tension faible. Dans cette phase, le composant peut se régénérer.

La phase de repos est maintenue pendant une durée dépendant par exemple de la durée de la phase de travail, de la dose d'irradiation du composant, et de la différence entre la tension nominale et la tension minimale de fonctionnement. La phase de repos peut également être maintenue aussi longtemps que le composant est en panne.

Enfin, lors d'une phase de contrôle, une tension initiale $V_{init}$, inférieure à la tension nominale, est appliquée au circuit et le bon fonctionnement du composant est vérifié.

A cet effet, le dispositif de contrôle d'alimentation 100 est équipé de moyens 120 de contrôle du fonctionnement reliés au composant 104.

Comme indiqué précédemment, ces moyens 120 peuvent être équipés de circuits de type "testeur de vie" ou "chien de garde" connus en soi.

Les moyens 120 de contrôle sont aussi reliés au circuit de sélection 110 pour le piloter et notamment pour interdire la phase de travail si un fonctionnement correct du composant n'est pas vérifié.

A titre accessoire, on peut noter que les moyens 120 de contrôle utilisés conjointement avec un abaisseur de tension 118 ajustable peuvent également être utilisés pour déterminer la tension minimale de fonctionnement du composant 104. Il suffit en effet, lors de la phase de contrôle de continuer d'abaisser la tension en-dessous de la tension initiale $V_{init}$ jusqu'à ce qu'une perte de fonctionnalité soit effectivement détectée.

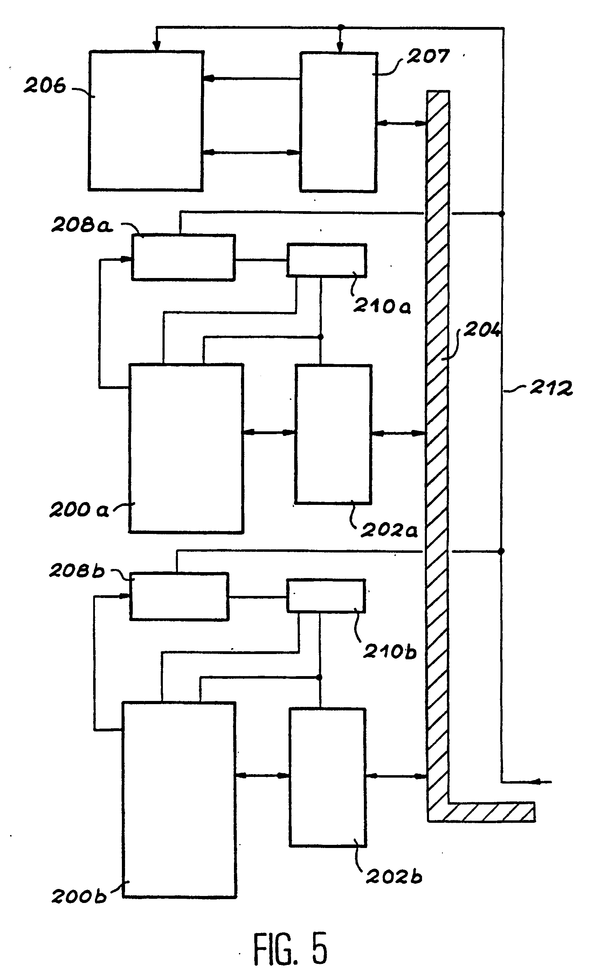

La figure 5 montre un exemple d'utilisation du dispositif selon la figure 4.

La figure 5 représente schématiquement et en partie un calculateur équipé d'une pluralité d'unités de calcul 200a et 200b identiques dont deux seules sont représentées.

Chaque unité de calcul est équipée d'une mémoire programmable de type PROM (Programmable Read Only Memory) et d'un micro-contrôleur.

Chaque unité de calcul est reliée à une interface d'entrée et de sortie d'information 202a, 202b pour transmettre et recevoir des données véhiculées sur un bus d'entrée et de sortie 204.

Le bus 204 permet d'échanger des informations avec des équipements périphériques ou avec une mémoire centrale 206 également munie d'une interface 207 d'entrée et de sortie.

On note également que chaque unité de calcul est équipée d'un circuit électronique de surveillance du type "chien de garde" 208a, 208b et d'une unité de contrôle 210a, 210b.

Le circuit électronique de surveillance 208a, 208b est respectivement relié à l'unité de calcul 200a, 200b correspondante qui doit continuellement lui communiquer des signaux caractéristiques de son fonctionnement. Dans cette application, les circuits de surveillance 208a, 208b jouent sensiblement le rôle des moyens de contrôle 120 (figure 4) décrits ci-dessus.

De la même façon, l'unité de contrôle 210a et 210b associée chaque unité de calcul joue sensiblement le rôle du circuit de sélection 110 de la figure 4.

L'unité de contrôle 210a, 210b est pilotée non seulement par le circuit de surveillance 208a et 208b correspondant, qui vérifie le bon fonctionnement de l'unité de calcul associée, mais également par l'unité de calcul elle-même qui peut piloter sa mise hors tension.

On peut enfin noter que les unités de calcul sont respectivement alimentées par l'intermédiaire des unités de contrôle et des circuits de surveillance, reliés à une ligne commune d'alimentation 212.

Finalement, l'unité de contrôle et le circuit de surveillance associés à chaque micro-contrôleur forment conjointement un dispositif de contrôle d'alimentation tel que représenté à la figure 4.

Pour expliquer le fonctionnement du calculateur de la figure 5, on considère que, dans un premier temps, le premier micro-contrôleur de la première unité de calcul 200a est en fonctionnement tandis que les micro-contrôleurs des autres unités de calcul sont au repos.

Dans ce cas, le premier micro-contrôleur gère le fonctionnement du calculateur. Lorsque sa phase de travail est achevée, il "réveille" un deuxième micro-contrôleur. Le deuxième micro-contrôleur est alors alimenté avec une tension d'alimentation initiale inférieure à la tension d'alimentation nominale et est soumis à un ou plusieurs tests de contrôle en association avec le circuit de contrôle 208b pour vérifier sa fonctionnalité.

Si le bon fonctionnement est vérifié, le deuxième micro-contrôleur est ensuite alimenté à sa tension nominale. Un transfert des données de travail a lieu entre les micro-contrôleurs. Puis, le deuxième micro-contrôleur entame une phase de travail, tandis que le premier micro-contrôleur retourne à une phase de repos où il n'est pas alimenté.

Si, par contre, le bon fonctionnement du deuxième micro-contrôleur n'est pas vérifié, celui-ci reste en phase de repos et le premier micro-contrôleur "réveille" un autre micro-contrôleur.

Un tel fonctionnement permet, compte tenu de la faculté des composants à se régénérer lorsqu'ils sont hors tension, d'accroître la disponibilité des calculateurs.

La figure 6 montre un autre système électronique équipé d'unités de calcul et d'un dispositif de contrôle d'alimentation conforme à l'invention.

Le système de la figure 6 comporte une pluralité d'unités de calcul référencées 300-1, ..., 300-n. Toutes les unités de calcul sont reliées à un bus 302 d'entrée et de sortie d'informations.

Le système comporte également un module électronique de supervision 304 fonctionnant conformément à l'invention et assurant la mise sous tension successive à tour de rôle d'une ou de plusieurs unités de calcul.

Un bus de contrôle 306 relie le module de supervision aux unités de calcul. Par l'intermédiaire du bus 306, le module de supervision effectue dans des phases de contrôle correspondantes, des vérifications de la fonctionnalité des unités de calcul.

Lors des phases de contrôle une tension initiale $V_{init}$ est appliquée aux unités de calcul de la façon décrite ci-dessus.

Le module de supervision 304 est également conçu pour mesurer et mémoriser la tension minimale de fonctionnement de chaque unité de calcul qui y est reliée.

Le module de supervision 304 est relié électriquement à chaque unité de calcul 300-1, ..., 300-n par des liaisons électriques 308 pour y appliquer une tension d'alimentation contrôlée conformément à l'invention.

Enfin, le module 304 est programmé pour ajuster individuellement pour chaque unité de calcul 300-1, ..., 300-n un rapport de la durée de la phase de travail sur la durée de la phase de repos en fonction d'une différence de tension entre la tension nominale d'alimentation et la tension minimale d'alimentation de cette unité de calcul.

## DOCUMENTS CITES

*(1)*

Calculateurs durcis embarqués pour la robotique nucléaire
Rad-Hard embedded computor for nuclear robotics de A. Giraud et al., pages 43 à 47 (actes du Congrès RADECS 1993)

*(2)*

FR-A-2 721 122

*(3)*

FR-A-2 663 160

*(4)*

Handbook of radiation effects de Andrew Holmes-Siedle/Lens Adams, Oxford Science Publications, pages 110 à 113

*(5)*

Total-Dose Issues for Microelectronics in Space Systems de Ronald L. Pease. IEEE Transactions on Nuclear Science, vol. 43, n°2, April 1996, pages 442 à 450.

*(6)*

SHUMAKE D.P. et al. "Hardened CMOS/SOS LSI circuits for satellite applications' IEEE ANNUAL CONFERENCE ON NUCLEAR AND SPACE RADIATION EFFECTS, WILLIAMSBURG, VA, USA, 12-15 JULY 1977, vol. ns-24, n°6, pages 2177-2180, XP002061047 ISSN 0018-9499, IEEE TRANSACTIONS ON NUCLEAR SCIENCE, DEC 1977, USA

## Revendications

**1.** Procédé de gestion du fonctionnement sous irradiation d'au moins un composant électronique comportant au moins un étage de transistors complémentaires de type MOS (104, 202a, 202b, 300-1, ..., 300-n), ayant une tension nominale d'alimentation ($V_{nom}$) et dont le lien entre un accroissement ($\Delta V$) de la tension d'alimentation et la dose d'irradiation, intégrée par le composant, admissible est connu dans lequel :

- lors d'une phase dite de contrôle on applique au composant (104, 202a, 202b, 300-1, ..., 300-n) une tension initiale d'alimentation ($V_{init}$) inférieure à la tension nominale et supérieure ou égale à une tension minimale ($V_{min}$) de fonctionnement et on effectue une vérification du fonctionnement du composant, et
- lors d'une phase dite de travail, de durée déterminée, engagée lorsque la vérification a révélé un fonctionnement correct du composant, on applique au composant une tension d'alimentation de travail ($V_{alim}$) supérieure à la tension d'alimentation initiale d'une quantité ($\Delta V$) liée à la durée de la phase de travail et à l'irradiation.

2. Procédé selon la revendication 1, dans lequel, en outre, lors d'une phase dite de repos, engagée soit lorsque la phase de travail est achevée, soit lorsque la vérification a révélé un fonctionnement défectueux, on applique au composant une tension de repos.

3. Procédé selon la revendication 1, dans lequel la tension d'alimentation de travail est sensiblement égale à la tension nominale.

4. Procédé selon la revendication 3, dans lequel on détermine une différence de tension $\Delta V$ permettant de maintenir un fonctionnement correct du composant (104, 202a, 202b, 300-1, ..., 300-n) pour une dose d'irradiation déterminée et on établit la tension initiale $V_{init}$ selon la formule suivante :

$$V_{init}=V_{nom}-\Delta V.$$

5. Procédé selon la revendication 4, dans lequel la phase de travail présente une durée déterminée en fonction de la différence de tension $\Delta V$.

6. Procédé selon la revendication 1 dans lequel on détermine pour chaque composant électronique la tension minimale de fonctionnement sous irradiation ($V_{min}$) et on ajuste un rapport de la durée de la phase de travail par rapport à la durée de la phase de repos en fonction de ladite tension minimale de fonctionnement.

7. Procédé selon la revendication 6, dans lequel on ajuste la durée de la phase de travail et de la phase de repos en fonction d'une différence entre la tension nominale et la tension minimale.

8. Procédé selon la revendication 6, dans lequel on détermine la tension minimale de fonctionnement pendant la phase de repos.

9. Procédé selon la revendication 1, **caractérisé en ce que** la tension de repos est la tension nulle ou une tension faible.

10. Procédé selon la revendication 1, dans lequel :

- on détermine, par test, une tension minimale de fonctionnement $V_{min}$ du composant sous irradiation puis
- on alimente le composant à une tension d'alimentation $V_{alim}$ telle que $V_{min}+\Delta V \leq V_{alim} \leq V_{nom}$, pendant une phase de travail dont la durée est déterminée en fonction de $\Delta V$, où $\Delta V$ est une différence de tension minimum entre la tension $V_{alim}$ et la tension $V_{min}$, puis
- on applique au composant une tension de repos pendant une phase de repos.

11. Dispositif (100) de contrôle d'alimentation selon la revendication 1, d'au moins un composant électronique comprenant au moins un étage de transistors complémentaires de type MOS, le dispositif comportant :

- des moyens (120, 208a, 208b, 304) de contrôle du fonctionnement du composant électronique,
- une source (112) de tension nominale d'alimentation,
- une source (116) de tension de repos,
- une source (114) de tension dite initiale inférieure à la tension nominale, et
- des moyens de sélection (110, 210a, 210b) pilotés par les moyens de contrôle pour sélectivement appliquer au composant :

  . la tension initiale lors d'une phase de contrôle,
  . la tension nominale d'alimentation lors d'une phase de travail lorsque le fonctionnement du composant est correct pendant la phase de contrôle,
  . la tension de repos pendant une phase de repos, lorsque le fonctionnement du composant électronique est défectueux pendant la phase de contrôle.

12. Dispositif selon la revendication 11, dans lequel les moyens de contrôle (120, 208a, 208b) comportent au moins un circuit de type "chien de garde".

13. Dispositif selon la revendication 11, dans lequel la source de tension initiale comporte un abaisseur de tension (118) relié à la source de tension nominale.

14. Calculateur comprenant une pluralité d'unités de calcul (200a, 200b) redondantes susceptibles de fonctionner tour à tour, **caractérisé en ce que** chaque unité de calcul est équipée d'un dispositif de contrôle d'alimentation conforme à la revendication 11.

15. Calculateur selon la revendication 14, dans lequel chaque unité de calcul comporte un micro-contrôleur apte à piloter lors de l'achèvement d'une phase de travail la mise sous tension d'une autre unité de calcul.

16. Calculateur selon la revendication 14, dans lequel chaque unité de calcul est programmée pour :

a) sélectionner une unité de calcul suivante lors de l'achèvement d'une phase de travail,
b) commander les moyens de contrôle (208a, 208b) du dispositif de contrôle d'alimentation de ladite unité de calcul suivante pour initier une phase de contrôle et une phase de travail si le contrôle révèle un fonctionnement correct,
c) sélectionner une autre unité de calcul suivante si le contrôle révèle un fonctionnement défectueux.

17. Système électronique comportant une pluralité d'unités de calcul (300-1, ..., 300-n) et un module électronique de supervision (304) pour le fonctionnement à tour de rôle des unités de calcul, dans lequel le module de supervision comporte au moins un dispositif de contrôle d'alimentation conforme à la revendication 11, associé à la pluralité d'unités de calcul.

18. Système selon la revendication 17, dans lequel chaque unité de calcul est reliée au dispositif de supervision par un bus d'échange de données (306) pour contrôler son bon fonctionnement et par une liaison électrique pour son alimentation électrique.

19. Système selon la revendication 18, dans lequel le module de supervision (304) comporte des moyens pour déterminer une tension minimale de fonctionnement de chaque unité de calcul (300-1, ..., 300-n) et est apte à ajuster un rapport de la durée de phase de travail sur la durée de la phase de repos de chaque unité de calcul en fonction de la tension minimale de fonctionnement de cette unité.

20. Procédé de test selon la revendication 1, dans lequel :

- on fait fonctionner le composant, en diminuant la tension d'alimentation du composant jusqu'à détecter un fonctionnement défectueux du composant,

- on relève la tension d'alimentation ($V_{min}$) du composant en-dessous de laquelle le fonctionnement défectueux se produit, et

- on compare cette tension d'alimentation à une tension nominale d'alimentation ($V_{nom}$) du composant pour établir une marge de tolérance de fonctionnement du composant sous, irradiation.

**Claims**

1. A method of managing the functioning under irradiation of at least one electronic component having at least one stage of complementary MOS-type transistors (104, 202a, 202b, 300-1, ..., 300-n) having a nominal supply voltage $V_{nom}$, state and whose link between an increase $\Delta V$ of the supply voltage and the admissible irradiation dose integrated by the component is known in which:

- during a so-called test phase, there is applied to the component (104, 202a, 202b, 300-1, ..., 300-n) an initial supply voltage $V_{init}$ less than the nominal voltage ($V_{nom}$) and greater than or equal to a minimum operating voltage ($V_{min}$), and a check is carried out on the functioning of the components, and

- during a so-called working phase, initiated when the check has revealed correct functioning of the component, there is applied to the component a working supply voltage ($V_{supp}$) greater than the initial supply voltage of a quantity $\Delta V$ linked with the duration of the working phase and the irradiation.

2. A method according to claim 1, in which, in addition, during a so-called off-load phase, begun either when the working phase is terminated or when the check has revealed defective functioning, an off-load voltage is applied to the component.

3. A method according to claim 1, in which the working supply voltage is substantially equal to the nominal voltage.

4. A method according to claim 3, in which a voltage difference $\Delta V$ is determined for maintaining a correct functioning of the component (104, 202a, 202b, 300-1, ..., 300-n) for a given irradiation dose, and the initial voltage $V_{init}$ is established according to the following formula:

$$V_{init} = V_{nom} - \Delta V.$$

5. A method according to claim 4, in which the working phase has a given duration as a function of the voltage difference $\Delta V$.

6. A method according to claim 1, in which, for each electronic component, the minimum operating voltage under irradiation ($V_{min}$) is determined and a ratio of the duration of the working phase compared with the duration of the off-load phase is adjusted as a function of the said minimum operating voltage.

7. A method according to claim 6, in which the duration of the working phase and of the off-load phase are adjusted as a function of a difference between the nominal voltage and the minimum voltage.

8. A method according to claim 6, in which the minimum operating voltage is determined during the off-load phase.

9. A method according to claim 1, **characterized in that** the off-load voltage is zero voltage or a low voltage.

10. A method according to claim 1 in which:

    - a minimum operating voltage $V_{min}$ of the component under irradiation is determined by test, then

    - the component is supplied at a supply voltage $V_{supp}$ such that $V_{min} + \Delta V \leq V_{supp} \leq V_{nom}$, during a working phase whose duration is determined according to $\Delta V$, $\Delta V$ being a voltage, and then

    - an off-load voltage is applied to the component during an off-load phase.

11. A supply control device (100) according to claim 1 for at least one electronic component comprising at least one stage of complementary MOS-type transistors, the device including:

    - means (120, 208a, 208b, 304) of controlling the functioning of the electronic component,

    - a nominal supply voltage source (112),

    - an off-load voltage source (116),

    - a so-called initial voltage source (114), less than the nominal voltage, and

    - selection means (110, 210a, 210b) controlled by the control means in order to selectively apply to the component:

    . the initial voltage during a control phase,

    . the nominal supply voltage during a working phase when the functioning of the component is correct during the control phase,

    . the off-load voltage during an off-load phase, when the functioning of the electronic component is defective during the control phase.

12. A device according to claim 11, in which the control means (120, 208a, 208b) include at least one circuit of the "watchdog" type.

13. A device according to claim 11, in which the initial voltage source includes a voltage reducer (118) connected to the nominal voltage source.

14. A computer comprising a plurality of redundant calculation units (200a, 200b) able to function in turn, **characterized in that** each calculation unit is equipped with a supply control device in accordance with claim 11.

15. A computer according to claim 14, in which each calculation unit includes a microcontroller able to control, when a working phase is completed, the powering up of another calculation unit.

16. A computer according to claim 14, in which each calculation unit is programmed to:

    a) select a following calculation unit when a working phase is completed,

    b) control the control means (208a, 208b) of the supply control device of the said following calculation unit in order to initiate a control phase and a working phase if the check reveals correct functioning,

    c) select another following calculation unit if the check reveals defective functioning.

17. An electronic system including a plurality of the calculation units (300-1, ..., 300-n) and an electronic supervision module (304) for the functioning of the calculation units in turn, in which the monitoring module has at least one supply control device in accordance with claim 11, associated with the plurality of calculation units.

18. A system according to claim 17, in which each calculation unit is connected to the monitoring device by a data exchange bus (306) in order to control its correct functioning and by an electrical link for its electrical supply.

**19.** A system according to claim 18, in which the monitoring module (304) includes means for determining a minimum operating voltage of each calculation unit (300-1, ..., 300-n) and is able to adjust a ratio of the duration of the working phase to the duration of the off-load phase of each calculation unit as a function of the minimum operating voltage of this unit.

**20.** A method of testing according to claim 1 in which:

- the component is caused to function whilst decreasing the supply voltage for the component until a defective functioning of the component is detected,

- a reading is taken of the supply voltage ($V_{min}$) of the component below which defective functioning occurs, and

- this supply voltage is compared with a nominal supply voltage ($V_{nom}$) for the component in order to establish an operating margin of tolerance for the component under irradiation.

**Patentansprüche**

**1.** Verfahren zum Betreiben wenigstens eines unter Strahlung arbeitenden elektronischen Bauteils, das wenigstens eine Stufe mit komplementären MOS-Transistoren (104, 202a, 202b, 300-1, ..., 300-n) mit einer Versorgungs-Nennspannung ($V_{nom}$) umfasst und bei dem die Verbindung bzw. der Zusammenhang zwischen einer Zunahme ($\Delta V$) der Versorgungsspannung und der durch das Bauteil integrierten zulässigen Strahlungsdosis bekannt ist, und bei dem man:

- während einer sogenannten Kontrollphase an das Bauteil (104, 202a, 202b, 300-1, ..., 300-n) eine Anfangsversorgungsspannung ($V_{init}$) anlegt, die niedriger als die Nennspannung und gleich groß oder größer als eine Minimalbetriebsspannung ($V_{min}$) ist, und man eine Überprüfung des Funktionierens des Bauteils durchführt, und
- während einer sogenannten Arbeitsphase von bestimmter Dauer, eingeleitet wenn die Überprüfung ein korrektes Funktionieren des Bauteils ergeben hat, an das Bauteil eine Arbeitsversorgungsspannung ($V_{alim}$) mit einer Größe ($\Delta V$) anlegt, die mit der Dauer der Arbeitsphase und der Strahlung verbunden ist.

**2.** Verfahren nach Anspruch 1, bei dem man außerdem während einer sogenannten Ruhephase, eingeleitet entweder wenn die Arbeitsphase beendet ist oder wenn die Überprüfung ein fehlerhaftes Funktionieren ergeben hat, an das Bauteil eine Ruhespannung anlegt.

**3.** Verfahren nach Anspruch 1, bei dem die Arbeitsversorgungsspannung im Wesentlichen gleich der Nennspannung ist.

**4.** Verfahren nach Anspruch 3, bei dem man eine Spannungsdifferenz $\Delta V$ festlegt, die ermöglicht, ein korrektes Funktionieren des Bauteils (104, 202a, 202b, 300-1, ..., 300-n) bei einer bestimmten Strahlungsdosis aufrechtzuerhalten und man die Anfangsspannung $V_{init}$ nach der folgenden Formel ermittelt:

$$V_{init} = V_{nom} - \Delta V.$$

**5.** Verfahren nach Anspruch 4, bei dem die Arbeitsphase eine bestimmte Dauer aufweist, abhängig von der Spannungsdifferenz $\Delta V$.

**6.** Verfahren nach Anspruch 1, bei dem man für jedes elektronische Bauteil die Minimalbetriebsspannung ($V_{min}$) unter Strahlung bestimmt und man ein Verhältnis der Dauer der Arbeitsphase in Bezug auf die Dauer der Ruhephase in Abhängigkeit von der genannten Minimalbetriebsspannung anpasst.

**7.** Verfahren nach Anspruch 6, bei dem man die Dauer der Arbeitsphase und der Ruhephase in Abhängigkeit von einer Differenz zwischen der Nennspannung und der Minimalspannung anpasst.

**8.** Verfahren nach Anspruch 6, bei dem man die Minimalbetriebsspannung während der Ruhephase bestimmt.

**9.** Verfahren nach Anspruch 1, **dadurch gekennzeichnet, dass** die Ruhespannung die Spannung null oder eine schwache Spannung ist.

**10.** Verfahren nach Anspruch 1 mit folgenden Schritten:

- man bestimmt durch einen Test eine Minimalbetriebsspannung $V_{min}$ des Bauteils unter Strahlung,
- man versorgt das Bauteil mit einer Versorgungsspannung $V_{alim}$ wie $V_{min}+\Delta V \leq V_{alim} \leq V_{nom}$ während einer Arbeitsphase, deren Dauer in Abhängigkeit von $\Delta V$ festgelegt wird, wo $\Delta V$ eine minimale Spannungsdifferenz zwischen der Spannung $V_{alim}$ und der Spannung $V_{min}$ ist,
- man legt an das Bauteil während einer Ruhephase eine Ruhespannung an.

**11.** Vorrichtung (100) zur Versorgungskontrolle nach Anspruch 1 von wenigstens einem elektronischen Bauteil mit wenigstens einer Stufe mit. komplementären MOS-Transistoren, wobei diese Vorrichtung umfasst:

- Einrichtungen (120, 208a, 208b, 304) zur Kontrolle des Funktionierens des elektronischen Bauteils,
- eine Versorgungs-Nennspannungsquelle (112),
- eine Ruhespannungsquelle (116),
- eine Quelle (114) der sogenannten Anfangsspannung, niedriger als die Nennspannung,
- Selektionseinrichtungen (110, 210a, 210b), gesteuert durch die Kontrolleinrichtungen, um an das Bauteil selektiv anzulegen:

    · die Anfangsspannung während einer Kontrollphase,
    · die Versorgungs-Nennspannung während einer Arbeitsphase, wenn das Bauteil während der Kontrollphase korrekt funktioniert,
    · die Ruhespannung während einer Ruhephase, wenn das elektronische Bauteil während der Kontrollphase fehlerhaft funktioniert.

**12.** Vorrichtung nach Anspruch 11, bei der die Kontrolleinrichtungen (120, 208a, 208b) wenigstens eine Schaltung des Typs "Wachhund" bzw. "Aufpasser" umfassen.

**13.** Vorrichtung nach Anspruch 11, bei der die Anfangsspannungsquelle eine Spannungsemiedrigungseinrichtung umfasst, verbunden mit der Nennspannungquelle.

**14.** Rechner mit einer Vielzahl redundanter Recheneinheiten (200a, 200b), abwechselnd bzw. nacheinander arbeitend, **dadurch gekennzeichnet, dass** jede Recheneinheit mit einer Versorgungskontrolleinrichtung nach Anspruch 11 ausgestattet ist.

**15.** Rechner nach Anspruch 14, bei dem jede Recheneinheit einen Mikrocontroller umfasst, der fähig ist, bei Abschluss einer Arbeitsphase Spannung an eine andere Recheneinheit anzulegen.

**16.** Rechner nach Anspruch 14, bei dem jede Recheneinheit so programmiert ist, dass sie fähig ist:

    a) bei Abschluss einer Arbeitsphase eine nachfolgende Recheneinheit auszuwählen,
    b) die Kontrolleinrichtungen (208a, 208b) der Versorgungskontrolleinrichtung der genannten nachfolgenden Recheneinheit zu steuern, um eine Kontrollphase und eine Arbeitsphase einzuleiten, wenn die Kontrolle ein korrektes Funktionieren anzeigt,
    c) eine andere nachfolgende Recheneinheit auszuwählen, wenn die Kontrolle ein fehlerhaftes Funktionieren anzeigt.

**17.** Elektronisches System mit einer Vielzahl von Recheneinheiten (300-1, ..., 300-n) und einem elektronischen Überwachungsmodul (304) für den abwechselnden Betrieb der Recheneinheiten, bei dem der Überwachungsmodul wenigstens eine Versorgungskontrollvorrichtung nach Anspruch 11 umfasst, verbunden mit der Vielzahl Recheneinheiten.

**18.** System nach Anspruch 17, bei dem jede Recheneinheit mit der Überwachungsvorrichtung durch einen Datenbus (306) zur Kontrolle ihres korrekten Funktionierens verbunden ist und eine elektrische Verbindung zu ihrer elektrischen Versorgung umfasst.

**19.** System nach Anspruch 18, bei dem der Überwachungsmodul (304) Einrichtungen zur Bestimmung einer minimalen Betriebsspannung jeder Recheneinheit (300-1, ..., 300-n) umfasst und fähig ist, ein Verhältnis der Arbeitsphasendauer in Bezug auf die Ruhephasendauer jeder Recheneinheit in Abhängigkeit von der minimalen Betriebspannung dieser Recheneinheit anzupassen.

**20.** Testverfahren nach Anspruch 1, bei dem man folgendermaßen vorgeht:

- man lässt das Bauteil arbeiten, indem man die Versorgungsspannung des Bauteils reduziert, bis man ein fehlerhaftes Funktionieren des Bauteils detektiert,
- man misst die Versorgungsspannung ($V_{min}$) des Bauteils, unterhalb der das fehlerhafte Funktionieren eintritt, und
- man vergleicht diese Versorgungsspannung mit einer Versorgungs-Nennspannung ($V_{nom}$) des Bauteils, um einen Betriebstoleranzbereich des Bauteils unter Strahlung zu festzulegen.

FIG. 1

FIG. 2

FIG. 3

13

FIG. 4

FIG. 6

FIG. 5